# EUROPEAN PATENT APPLICATION

(11) **EP 4 815 277 A1**
(43) Date of publication of application: **30.09.2026**
(21) Application number: 25204983.8
(22) Date of filing: 26.09.2025
(51) Int. Cl.: H02M 1/00, H02M 5/293, H02M 7/48

(54) **BIDIRECTIONAL SWITCH UNIT AND POWER CONVERTER**

(30) Priority: 27.03.2025 US 202563778781 P; 15.07.2025 CN 202510973138
(71) Applicant: DELTA ELECTRONICS, INC., Taoyuan City 320023 (TW)
(72) Inventor: LI, Sheng-Hua, 320023 Taoyuan City (TW); LIN, You-Si, 320023 Taoyuan City (TW); LEE, Yi-Jie, 320023 Taoyuan City (TW)
(74) Representative: 2K Patent Partnerschaft mbB

(57) **Abstract**

A bidirectional switch unit includes an inductor (L1, L2, L2a, L2b, L2c, L3, L3a, L3b, L3c), a first switch (S1, S1a, S1b, S1c, S3, S3a, S3b, S3c), a second switch (S2, S2a, S2b, S2c, S4, S4a, S4b, S4c), a first back-to-back switch pair (SA, SA2) and a first capacitor (CA, CAa, CAb, CAc, CC, CCa, CCb, CCc) to form a first switch branch, and a second back-to-back switch pair (SB, SB2) and a second capacitor (CB, CBa, CBb, CBc, CD, CDa, CDb, CDc) to form a second switch branch. The first terminal of the first switch (S1, S1a, S1b, S1c, S3, S3a, S3b, S3c) is connected to the first terminal of the inductor (L1, L2, L2a, L2b, L2c, L3, L3a, L3b, L3c) to form a first common-connected node (P1). The first terminal of the second switch (S2, S2a, S2b, S2c, S4, S4a, S4b, S4c) is connected to the second terminal of the inductor (L1, L2, L2a, L2b, L2c, L3, L3a, L3b, L3c) to form a second common-connected node (P2). A first terminal of the first switch branch is connected to the first switch (S1, S1a, S1b, S1c, S3, S3a, S3b, S3c), and a second terminal of the first switch branch is connected to the second common-connected node (P2). A first terminal of the second switch branch is connected to the first common-connected node (P1), and a second terminal of the second switch branch is connected to the second switch (S2, S2a, S2b, S2c, S4, S4a, S4b, S4c).

## Description

### BACKGROUND

### Technical Field

The present disclosure relates to a bidirectional switch unit and a power converter, and more particularly to a bidirectional switch unit with zero-voltage switching and a power converter.

### Description of Related Art

The statements in this section merely provide background information related to the present disclosure and do not necessarily constitute prior art.

The single-phase three-wire AC-to-AC converter can be used in similar application environments such as on-board charge module (OBCM) or backup circuits of home energy storage system to provide home load (vehicle-to-home, V2H). Conventional technology uses a center-tapped line-frequency transformer, as shown in FIG. 1, and a single-phase two-wire to single-phase three-wire AC-to-AC converter, as shown in FIG. 2 and FIG. 3.

The center-tapped line-frequency transformer has the disadvantages of being heavy and large in size, and is easily limited by the equipment installation space. The single-phase two-wire to single-phase three-wire AC-to-AC converter uses high-frequency switch switching units to reduce the volume of magnetic components and realize load-end voltage control. However, the high-frequency switch in the conventional technology uses hard switching technology, which produces large switching losses and causes poor conversion efficiency.

Therefore, how to design a bidirectional switch unit and a power converter to solve the problems and technical bottlenecks in the existing technology has become a critical topic in this field.

### SUMMARY

An objective of the present disclosure is to provide a bidirectional switch unit. The bidirectional switch unit includes an inductor, a first switch, a second switch, a first back-to-back switch pair and a first capacitor, and a second back-to-back switch pair and a second capacitor. The inductor has a first terminal and a second terminal. The first switch has a first terminal and a second terminal, and the first terminal of the first switch is connected to the first terminal of the inductor to form a first common-connected node. The second switch has a first terminal and a second terminal, and the first terminal of the second switch is connected to the second terminal of the inductor to form a second common-connected node. The first back-to-back switch pair is connected to the first capacitor in series to form a first switch branch, and the first switch branch has a first terminal and a second terminal; the first terminal of the first switch branch is connected to the second terminal of the first switch, and the second terminal of the first switch branch is connected to the second common-connected node. The second back-to-back switch pair is connected to the second capacitor in series to form a second switch branch, and the second switch branch has a first terminal and a second terminal; the first terminal of the second switch branch is connected to the first common-connected node, and the second terminal of the second switch branch is connected to the second terminal of the second switch.

Another objective of the present disclosure is to provide a power converter. The power converter includes at least one switch bridge arm. The at least one switch bridge arm includes a plurality of bidirectional switch units. Each bidirectional switch unit includes an inductor, a first switch, a second switch, a first back-to-back switch pair and a first capacitor, and a second back-to-back switch pair and a second capacitor. The inductor has a first terminal and a second terminal. The first switch has a first terminal and a second terminal, and the first terminal of the first switch is connected to the first terminal of the inductor to form a first common-connected node. The second switch has a first terminal and a second terminal, and the first terminal of the second switch is connected to the second terminal of the inductor to form a second common-connected node. The first back-to-back switch pair is connected to the first capacitor in series to form a first switch branch, and the first switch branch has a first terminal and a second terminal; the first terminal of the first switch branch is connected to the second terminal of the first switch, and the second terminal of the first switch branch is connected to the second common-connected node. The second back-to-back switch pair is connected to the second capacitor in series to form a second switch branch, and the second switch branch has a first terminal and a second terminal; the first terminal of the second switch branch is connected to the first common-connected node, and the second terminal of the second switch branch is connected to the second terminal of the second switch. The at least one switch bridge arm receives an input power source, and converts the input power source into an output power source through the bidirectional switch units so as to provide a plurality of outputs.

Therefore, the bidirectional switch unit and the power converter of the present disclosure have the following features and advantages: 1. The overall system structure achieves a soft-switching effect through structural adjustments in the switch unit, and the output voltage is distributed through the alternating operation of the two switch units. By adding auxiliary switches, inductors and capacitors in the switch unit to provide an additional resonant circuit, the voltage at both terminals is zero before the switch is turned on, achieving a soft-switching effect. Compared with the traditional hard-switching solution, the switching loss during switching is reduced, thereby increasing system efficiency and heat dissipation conditions. In addition, compared with the center-tapped line-frequency transformer, the weight and volume can be improved to a certain extent; 2. Regardless of whether the load is balanced or unbalanced, each high-frequency switch can achieve the desired zero-voltage switching behavior by operating in the positive and negative half-cycles of the input power source.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:

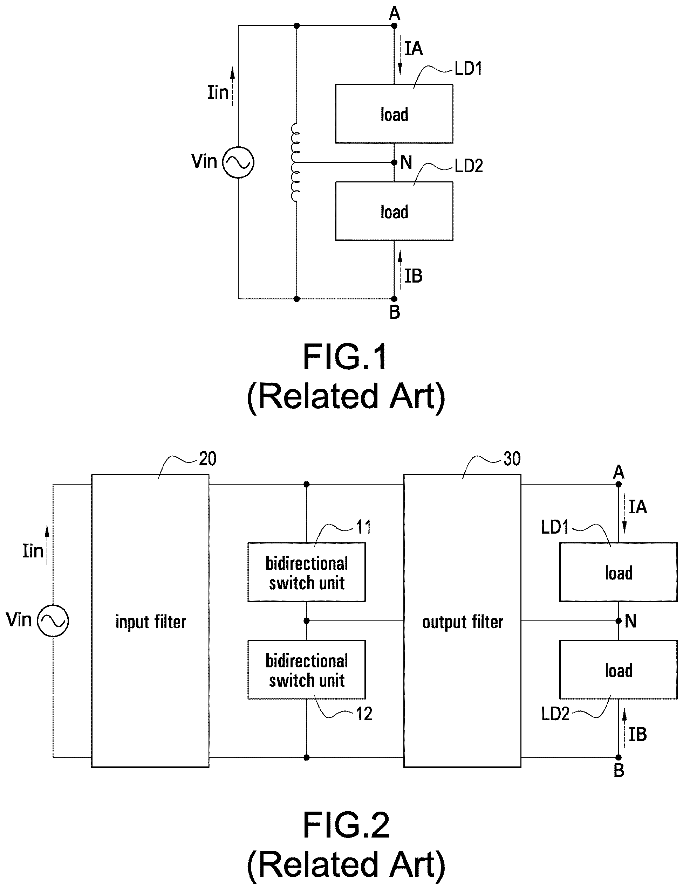

FIG. 1 is a block diagram of a single-phase two-wire to single-phase three-wire AC-to-AC converter using a center-tapped line-frequency transformer in the related art.
FIG. 2 is a block diagram of a single-phase two-wire to single-phase three-wire switching AC-to-AC converter in the related art.

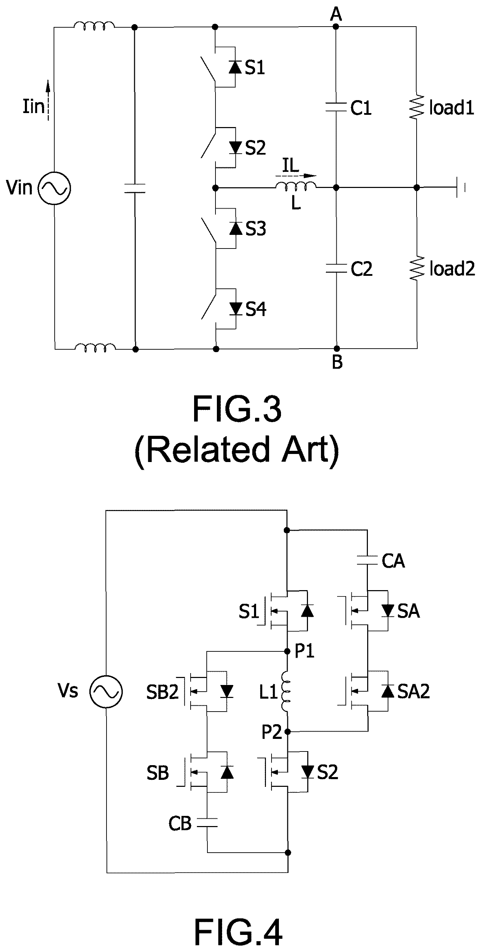

FIG. 3 is a circuit diagram of the single-phase two-wire to single-phase three-wire switching AC-to-AC converter in the related art.
FIG. 4 is a circuit diagram of a bidirectional switch unit according to the present disclosure.

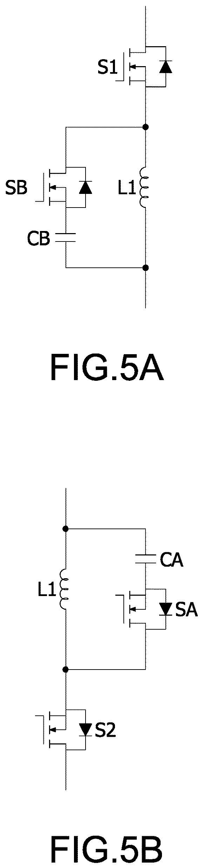

FIG. 5A is an equivalent circuit diagram of FIG. 4 when an input power source is a positive voltage.
FIG. 5B is an equivalent circuit diagram of FIG. 4 when the input power source is a negative voltage.

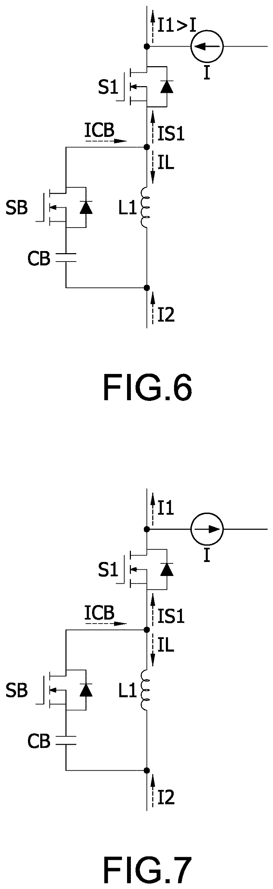

FIG. 6 is a schematic circuit diagram of FIG. 4 showing a load current flowing in when the input power source is a positive voltage.
FIG. 7 is a schematic circuit diagram of FIG. 4 showing the load current flowing out when the input power source is the positive voltage.

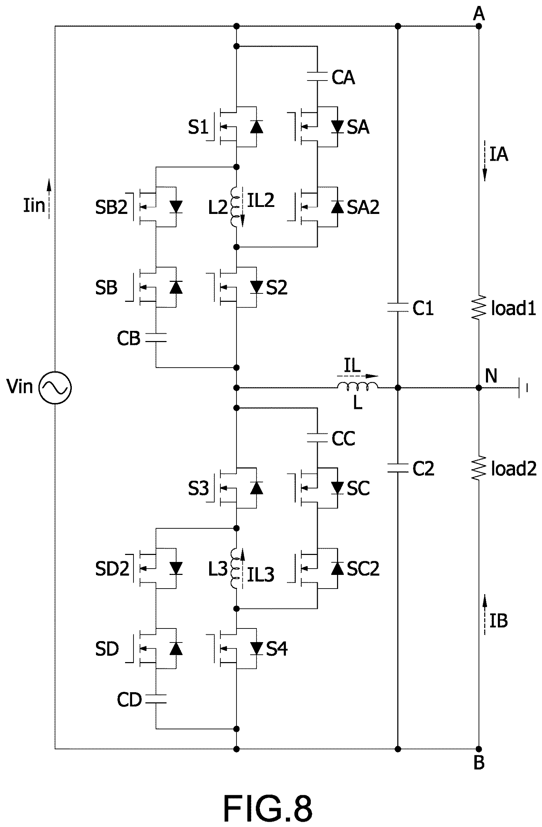

FIG. 8 is a circuit diagram of a power converter according to the present disclosure.

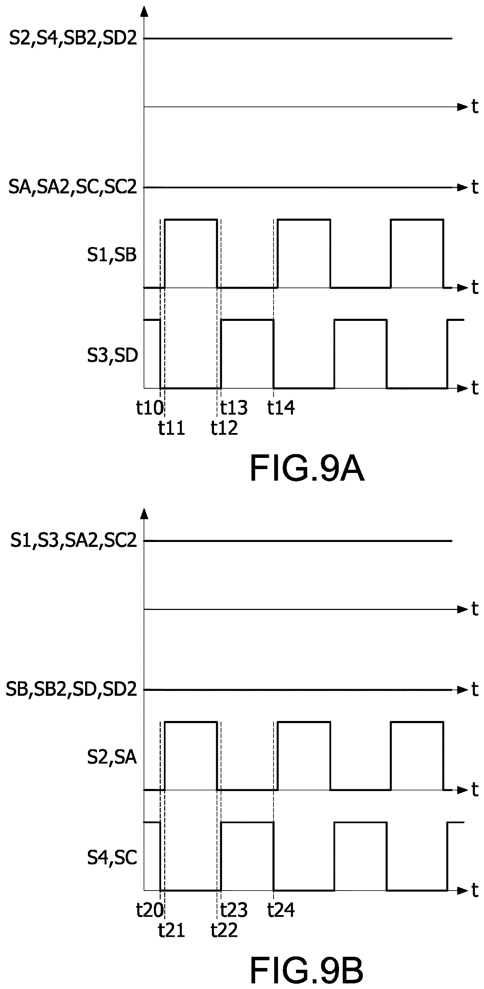

FIG. 9A is a control waveform diagram of the bidirectional switch unit of the power converter in a positive half cycle according to the present disclosure.
FIG. 9B is a control waveform diagram of the bidirectional switch unit of the power converter in a negative half cycle according to the present disclosure.

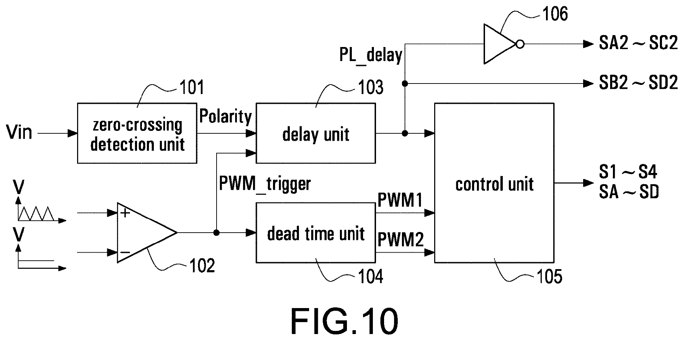

FIG. 10 is a block diagram of controlling the power converter according to the present disclosure.

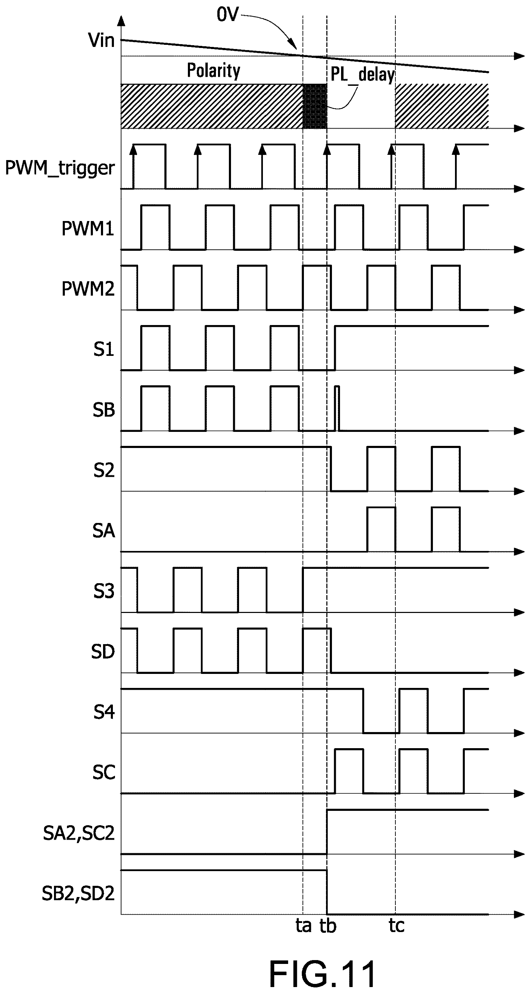

FIG. 11 is a waveform diagram of control signals of the power converter according to the present disclosure.

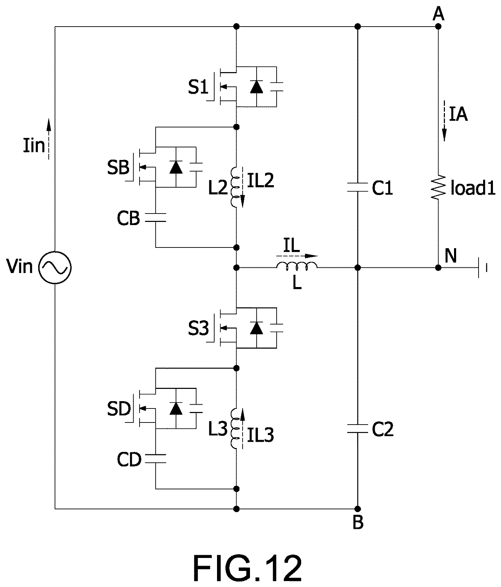

FIG. 12 is a schematic circuit diagram of the power converter under unbalanced load conditions and the input voltage is positive according to the present disclosure.

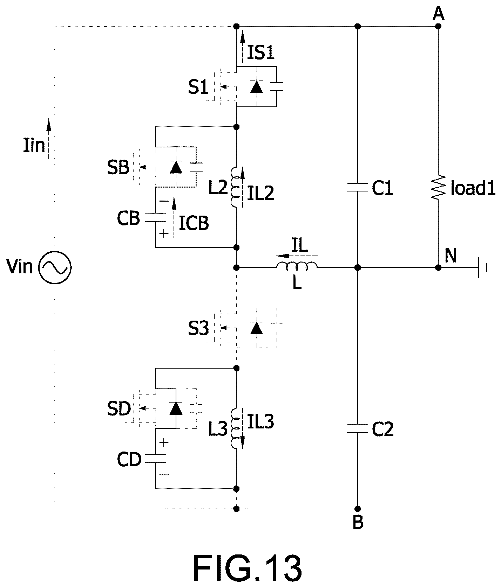

FIG. 13 is a schematic circuit diagram of the power converter of FIG. 12 operating in a first time interval.

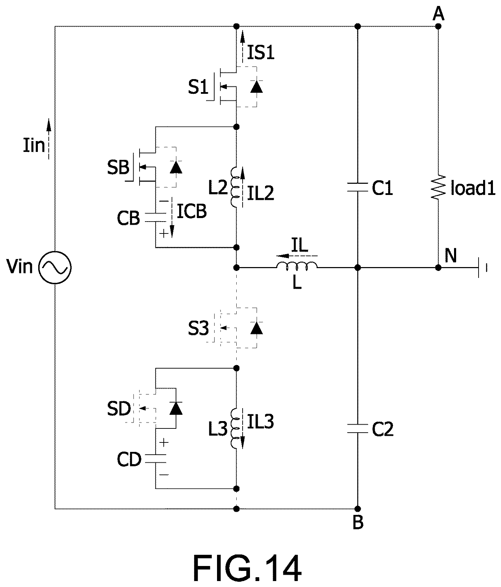

FIG. 14 is a schematic circuit diagram of the power converter of FIG. 12 operating in a second time interval.

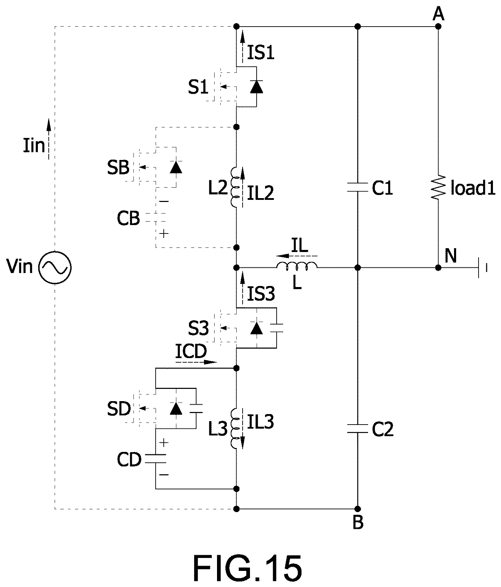

FIG. 15 is a schematic circuit diagram of the power converter of FIG. 12 operating in a third time interval.

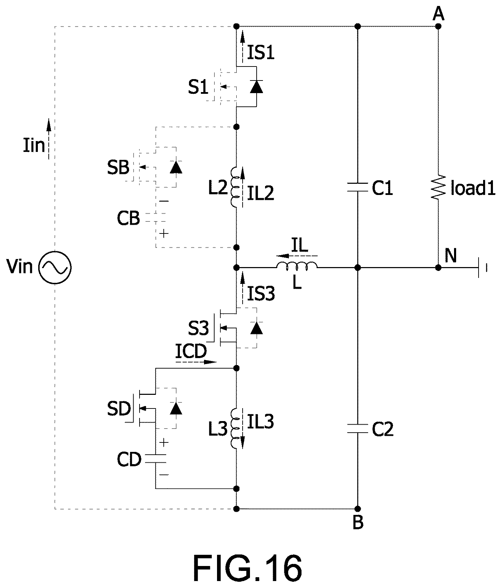

FIG. 16 is a schematic circuit diagram of the power converter of FIG. 12 operating in a fourth time interval.

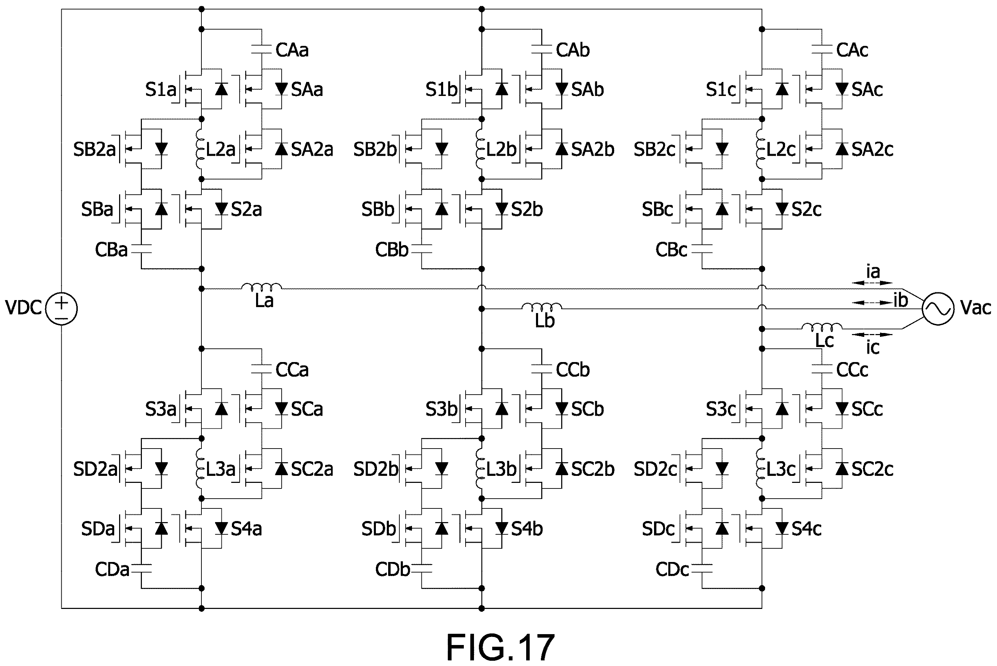

FIG. 17 is a circuit diagram of a three-phase DC-to-AC converter according to the present disclosure.

### DETAILED DESCRIPTION

Reference will now be made to the drawing figures to describe the present disclosure in detail. It will be understood that the drawing figures and exemplified embodiments of present disclosure are not limited to the details thereof.

The present disclosure proposes a soft switching solution for single-phase two-wire to single-phase three-wire AC-to-AC converter. The overall system structure may be seen in FIG. 2. The soft switching effect is achieved through the structural adjustment in the switch unit, and the output voltage is distributed through the alternating operation of the two switch units. The auxiliary switch, inductors and capacitors are added in the switch unit to provide an additional resonant circuit so that the voltage between the two terminals is zero before the switch is turned on, thereby achieving the soft switching effect. Compared with the traditional hard switching solution, the switching loss during switching is reduced, thereby increasing the system efficiency and improving the heat dissipation requirements. In addition, compared with the center-tapped line-frequency transformer, the weight and volume can be improved to a certain extent.

Please refer to FIG. 4, which shows a circuit diagram of a bidirectional switch unit according to the present disclosure. The bidirectional switch unit has a soft-switching characteristic, and thus can be referred to as a soft-switching bidirectional switch unit. The soft-switching bidirectional switch unit includes an inductor L1, a first switch S1, a second switch S2, a first back-to-back switch pair SA, SA2 and a first capacitor CA, and a second back-to-back switch pair SB, SB2 and a second capacitor CB.

The inductor L1 has a first terminal and a second terminal. The first switch S1 has a first terminal and a second terminal, which are non-control terminals. In this embodiment shown in FIG. 4, the first switch S1 is a metal-oxide-semiconductor field-effect transistor (MOSFET), but the present disclosure is not limited thereto. The first terminal (i.e., a source in this embodiment) of the first switch S1 is connected to the first terminal of the inductor L1 to form a first common-connected node P1. The second switch S2 has a first terminal and a second terminal, which are non-control terminals. In this embodiment shown in FIG. 4, the second switch S2 is a metal-oxide-semiconductor field-effect transistor (MOSFET), but the present disclosure is not limited thereto. The first terminal (i.e., a source in this embodiment) of the second switch S2 is connected to the second terminal of the inductor L1 to form a second common-connected node P2.

The first back-to-back switch pair SA, SA2 has a first terminal and a second terminal, which are non-control terminals. The first back-to-back switch pair SA, SA2 includes a third switch SA and a fourth switch SA2, and the third switch SA is connected back-to-back to the fourth switch SA2. In this embodiment shown in FIG. 4, the third switch SA and the fourth switch SA2 are MOSFETs, and the third switch SA and the fourth switch SA2 are connected to each other in a common-drain manner, but this is not intended to limit the present disclosure, that is, the third switch SA and the fourth switch SA2 may also be connected to each other in a common-source manner. The present disclosure will be described by taking the common-drain manner as an example. Therefore, the first terminal (i.e., the source of the third switch SA in this embodiment) of the first back-to-back switch pair SA, SA2 is connected to the second terminal (i.e., the drain in this embodiment) of the first switch S1, and the second terminal (i.e., the source of the fourth switch SA2 in this embodiment) of the first back-to-back switch pair SA, SA2 is connected to the second common-connected node P2.

The second back-to-back switch pair SB, SB2 has a first terminal and a second terminal, which are non-control terminals. The second back-to-back switch pair SB, SB2 includes a fifth switch SB and a sixth switch SB2, and the fifth switch SB is connected back-to-back to the sixth switch SB2. In this embodiment shown in FIG. 4, the fifth switch SB and the sixth switch SB2 are MOSFETs, and the fifth switch SB and the sixth switch SB2 are connected to each other in a common-drain manner, but this is not intended to limit the present disclosure, that is, the fifth switch SB and the sixth switch SB2 may also be connected to each other in a common-source manner. The present disclosure will be described by taking the common-drain manner as an example. Therefore, the first terminal (i.e., the source of the sixth switch SB2 in this embodiment) of the second back-to-back switch pair SB, SB2 is connected to the first common-connected node P1, and the second terminal (i.e., the source of the fifth switch SB in this embodiment) of the second back-to-back switch pair SB, SB2 is connected to the second terminal (i.e., the drain in this embodiment) of the second switch S2.

As shown in FIG. 4, the first back-to-back switch pair SA, SA2 and the first capacitor CA form a first switch branch, and two terminals of the first switch branch are respectively connected to the second common-connected node P2 and the second terminal of the first switch S1. Therefore, the first back-to-back switch pair SA, SA2 is connected between the second common-connected node P2 and the second terminal of the first switch S1 through the first capacitor CA. As shown in FIG. 4, that is, the first capacitor CA is connected between the third switch SA and the first switch S1, or the first capacitor CA is connected between the fourth switch SA2 and the second common-connected node P2 (not shown in FIG. 4). Furthermore, the second back-to-back switch pair SB, SB2 and the second capacitor CB form a second switch branch, and two terminals of the second switch branch are respectively connected to the first common-connected node P1 and the second terminal of the second switch S2. Therefore, the second back-to-back switch pair SB, SB2 is connected between the first common-connected node P1 and the second terminal of the second switch S2 through the second capacitor CB. As shown in FIG. 4, that is, the second capacitor CB is connected between the fifth switch SB and the second switch S2, or the second capacitor CB is connected between the sixth switch SB2 and the first common-connected node P1 (not shown in FIG. 4).

The bidirectional switch unit shown in FIG. 4 is connected to an AC power source Vs. Therefore, according to the different voltage polarities caused by the positive and negative half-cycle changes of the AC power source Vs, some switches of the bidirectional switch unit remain always turned on and some switches remain always turned off, as described below.

When the AC power source Vs is in the positive half cycle (i.e., Vs>0), the second switch S2 and the sixth switch SB2 of the second back-to-back switch pair SB, SB2 are always turned on, and the third switch SA and the fourth switch SA2 of the first back-to-back switch pair SA, SA2 are always turned off, and therefore the bidirectional switch unit circuit of FIG. 4 may be equivalent to the equivalent circuit of FIG. 5A. When the AC power source Vs is in the negative half cycle (i.e., Vs<0), the first switch S1 and the fourth switch SA2 of the first back-to-back switch pair SA, SA2 are always turned on, and the fifth switch SB and the sixth switch SB2 of the second back-to-back switch pair SB, SB2 are always turned off, and therefore the bidirectional switch unit circuit of FIG. 4 may be equivalent to the equivalent circuit of FIG. 5B.

It may be seen from FIG. 5A (equivalent circuit under the positive half cycle of the AC power source Vs) and FIG. 5B (equivalent circuit under the negative half cycle of the AC power source Vs) that these two equivalent circuits are symmetrical. Take the equivalent circuit under the positive half cycle of the AC power source Vs as an example. As shown in FIG. 6, the load current I flowing in is explained, where the current I1>I is a necessary condition for soft switching. As shown in FIG. 7, incidentally, the load of the present disclosure is not limited to a resistive load. In other words, it is applicable to both inductive loads and capacitive loads. Furthermore, not only the soft switching operation of single-phase two-wire to single-phase three-wire can be achieved for balanced resistive loads, inductive loads, or capacitive loads, but also the soft switching operation of single-phase two-wire to single-phase three-wire can be achieved for unbalanced resistive loads, inductive loads, or capacitive loads.

Please refer to FIG. 8, which shows a circuit diagram of a power converter according to the present disclosure. Incidentally, the power converter shown in FIG. 8 uses two sets of bidirectional switch units mentioned above as bridge arm switches, one set as a bidirectional upper bridge arm switch with a soft-switching function, and the other set as a bidirectional lower bridge arm switch with a soft-switching function. In other words, the embodiment of FIG. 8 is only an embodiment of a power converter and is not intended to limit the present disclosure. All switch application fields that require soft-switching purposes and bidirectional control are the application scope of the bidirectional switch unit of the present disclosure. In other words, in other applications, multiple sets of bidirectional switch units may be used as the required bridge arm switches according to the requirements of the bridge arm topology.

Taking the power converter of FIG. 8 as an example, it includes an upper bridge arm and a lower bridge arm. The upper bridge arm includes an inductor L2, a first switch S1, a second switch S2, a first back-to-back switch pair SA, SA2, a second back-to-back switch pair SB, SB2, a first capacitor CA, and a second capacitor CB. The lower bridge arm correspondingly includes an inductor L3, a first switch S3, a second switch S4, a first back-to-back switch pair SC, SC2, a second back-to-back switch pair SD, SD2, a first capacitor CC, and a second capacitor CD. For the specific circuit connection relationship, please refer to the above disclosure, which will not be repeated here. Furthermore, as shown in FIG. 8, it further includes an output filter composed of a filtering inductor L and filtering capacitors C1, C2. Taking two bidirectional switch units as an example, there is a set of output filter, including a filtering inductor L, a first filtering capacitor C1, and a second filtering capacitor C2. The set of output filter is coupled between the two bidirectional switch units. As shown in FIG. 8, the filtering inductor L, the first filtering capacitor C1, and the second filtering capacitor C2 are connected to a neutral point N. In addition, the other terminal of the filtering inductor L is coupled between the upper bridge arm and the lower bridge arm. The other terminal of the first filtering capacitor C1 and the other terminal of the second filtering capacitor C2 are respectively connected to the two terminals of the input power source Vin.

The switch unit and the output filter proposed in FIG. 8 establish a soft switching scheme for a single-phase two-wire to single-phase three-wire AC-to-AC converter, wherein the single-phase two-wire to single-phase three-wire AC-to-AC converter can be applied to an on-board charge module or a home energy storage system, but this is not intended to limit the present disclosure. The control mode is divided into three situations: positive half-cycle control, negative half-cycle control, and zero-crossing interval control (i.e., transition control of positive half cycle to negative half cycle or transition control of negative half cycle to positive half cycle), and in different situations, some switches remain always turned on, and some switches remain always turned off. Please refer to FIG. 9A and FIG. 9B, which show control waveform diagrams of the bidirectional switch unit of the power converter in a positive half cycle and a negative half cycle according to the present disclosure, respectively, and also refer to FIG. 8.

Please refer to FIG. 9A, when the input power source Vin is in the positive half cycle (i.e., Vin>0), the second switch S2, the second switch S4, the sixth switch SB2 of the second back-to-back switch pair SB, SB2, and the sixth switch SD2 of the second back-to-back switch pair SD, SD2 are always turned on, and the third switch SA and the fourth switch SA2 of the first back-to-back switch pair SA, SA2, and the third switch SC and the fourth switch SC2 of the first back-to-back switch pair SC, SC2 are always turned off, and the remaining switches S1, SB, S3, SD perform high-frequency alternating switching. Similarly, as shown in FIG. 9B, when the input power source Vin is in the negative half cycle (i.e., Vin<0), the first switch S1, the first switch S3, the fourth switch SA2 of the first back-to-back switch pair SA, SA2, and the fourth switch SC2 of the first back-to-back switch pair SC, SC2 are always turned on, and the fifth switch SB and the sixth switch SB2 of the second back-to-back switch pair SB, SB2, and the fifth switch SD and the sixth switch SD2 of the second back-to-back switch pair SD, SD2 are always turned off, and the remaining switches S2, SA, S4, SC perform high-frequency alternating switching. Incidentally, the duty cycle of the switch control signal for alternating switching is controlled to be 50%, and there is no need to detect the output voltage information additionally.

Please refer to FIG. 10, which shows a block diagram of controlling the power converter according to the present disclosure, and also refer to FIG. 11, which shows a waveform diagram of control signals of the power converter according to the present disclosure. In the zero-crossing interval, in order to avoid the situation that the switch signals of the first switches S1, S3, the second switches S2, S4, the third switches SA, SC, and the fourth switches SB, SD of the back-to-back switch pairs are simultaneously in a high state (high-level state) and are simultaneously turned on. First, a zero-crossing detection unit 101, or a zero-crossing determination circuit, is used to determine the positive and negative polarity of the voltage of the input power source Vin. The triangle wave and the DC level are compared by a comparison unit 102 to generate a pulse-width modulation (PWM) signal. The pulse-width modulation signal is processed by a dead time unit 104 to generate a first pulse-width modulation signal PWM1 and a second pulse-width modulation signal PWM2 complementary to each other, with a dead time intervale between them. Therefore, the dead time unit 104 processes the dead time (or short-circuit prevention time) between corresponding switches. The dead time generated by delay can prevent the corresponding switches, such as the upper switch and the lower switch of the same bridge arm, from shorting through.

Afterward, the positive edge (or rising edge) triggers to control a delay unit 103 to determine the switching timing of the positive and negative half-cycle modes. Therefore, the delay provided by the delay unit 103 is used as the zero-crossing timing, for example, in the AC power source, the zero-crossing point of the voltage waveform with a phase angle of 0 degrees or 180 degrees, that is, the moment when the voltage changes from a positive value to a negative value or a negative value to a positive value, for a specific switch to extend its turned-on and turned-off time to increase the triggering accuracy. Therefore, the delay unit 103 is based on the polarity information obtained by the zero-crossing detection unit 101, such as shown in FIG. 11, the oblique line time interval before 0V is positive, and the oblique line time interval after 0V is negative, and finally achieves the above-mentioned purposes. Therefore, after the zero-crossing point (i.e., "0V" indicated on FIG. 11) where the positive voltage changes to the negative voltage, and after a delay of PL_delay, the control signals of the fourth switch SA2 and the fourth switch SC2 are converted from a low level (always turned-off control) to a high level (always turned-on control). Correspondingly, the control signals of the sixth switch SB2 and the sixth switch SD2 may be converted from a high level (always turned-on control) to a low level (always turned-off control) through an inverting unit 106, thereby controlling the corresponding switches. Finally, the switch signal is modulated by a control unit 105 with a modulation function so that it operates according to a specific mode. The control concept is shown in FIG. 10, and the generated switch signal is shown in FIG. 11.

The following further describes the circuit behavior when the input power source Vin is in the positive half cycle and the load is unbalanced. As mentioned above, in the positive half cycle, some switches remain always turned on and some switches remain always turned off, and therefore the circuit is simplified according to the principle of always turned-on and always turned-off. Furthermore, considering the situation of unbalanced load (taking the extreme load imbalance in which a load load2 is regarded as an open circuit as an example), the final simplified circuit is shown in FIG. 12.

The positive half-cycle control signal shown in FIG. 9A is described with the state marked from time t10 to time t14. In particular, time t14 is equivalent to the state of time t10, and time t10 to time t14 is a cycle of a pulse-width modulation (PWM) signal. In particular, the first switch S1 and the fifth switch SB of the second back-to-back switch pair are turned on and turned off at the same time (i.e., synchronously switched on and switched off); the first switch S3 and the fifth switch SD of the second back-to-back switch pair are turned on and turned off at the same time. The first switch S1 (the fifth switch SB of the second back-to-back switch pair) and the first switch S3 (the fifth switch SD of the second back-to-back switch pair) are alternately turned on and turned off.

The operation from time t10 to time t11 is shown in conjunction with FIG. 13, which shows a schematic circuit diagram of the power converter of FIG. 12 operating in a first time interval. The first switches S1, S3 and the fifth switches SB, SD of the second back-to-back switch pair are all turned off (indicated by dotted lines in FIG. 13), which is the dead time of the circuit. An inductor current IL flowing through the inductor L continues to flow, and a switch parasitic capacitance of the first switch S1 is discharged through a current IS1, and a switch parasitic capacitance of the fifth switch SB of the second back-to-back switch pair is discharged through a current ICB. Therefore, the voltage drop across the first switch S1 and the fifth switch SB of the second back-to-back switch pair is zero, that is, a drain-source voltage drop of the first switch S1 is zero, and a drain-source voltage drop of the fifth switch SB is zero. The schematic circuit is shown in FIG. 13.

The operation from time t11 to time t12 is shown in conjunction with FIG. 14, which shows a schematic circuit diagram of the power converter of FIG. 12 operating in a second time interval. The first switch S1 and the fifth switch SB of the second back-to-back switch pair are turned on to achieve zero-voltage switching (ZVS) to reduce the switching loss of the first switch S1 and the fifth switch SB. The inductor L2 and the second capacitor CB resonate, and an inductor current IL2 flowing through the inductor L2 increases, and the direction of the current ICB changes. The schematic circuit is shown in FIG. 14. Therefore, from time t10 to time t12, the voltage across the first switch S1 and the fifth switch SB of the second back-to-back switch pair can be reduced to zero by discharging the switch parasitic capacitance of the first switch S1 and the fifth switch SB of the second back-to-back switch pair, and then the first switch S1 and the fifth switch SB of the second back-to-back switch pair are turned on to achieve a soft switching operation of zero voltage switching.

The operation from time t12 to time t13 is shown in conjunction with FIG. 15, which shows a schematic circuit diagram of the power converter of FIG. 12 operating in a third time interval. The first switches S1, S3 and the fifth switch SB, SD of the second back-to-back switch pair are all always turned off (indicated by dotted lines in FIG. 15), which is the dead time of the circuit. An inductor current IL2 flowing through the inductor L2 continues to flow, and the inductor current IL2 is greater than the inductor current IL, and the magnitude of a current IS3 is equal to the current value of the inductor current IL2 minus the current value of the inductor current IL. Furthermore, a current ICD is generated at the same time. A switch parasitic capacitance of the first switch S3 is discharged through the current IS3, and a switch parasitic capacitance of the fifth switch SD of the second back-to-back switch pair is discharged through the current ICD. Afterward, the voltage drop across the first switch S3 and the fifth switch SD of the second back-to-back switch pair is zero, that is, a drain-source voltage drop of the first switch S3 is zero, and a drain-source voltage drop of the fifth switch SD is zero. The schematic circuit is shown in FIG. 15.

The operation from time t13 to time t14 is shown in conjunction with FIG. 16, which shows a schematic circuit diagram of the power converter of FIG. 12 operating in a fourth time interval. The first switch S3 and the fifth switch SD of the second back-to-back switch pair are turned on to achieve zero-voltage switching (ZVS) to reduce the switching loss of the first switch S3 and the fifth switch SD. The inductor L3 and the second capacitor CD resonate, and the second capacitor CD is charged. The schematic circuit is shown in FIG. 16. Therefore, from time t12 to time t14, the switch parasitic capacitance of the first switch S3 and the fifth switch SD of the second back-to-back switch pair is discharged so that the voltage across the first switch S3 and the fifth switch SD of the second back-to-back switch pair is reduced to zero, and then the first switch S3 and the fifth switch SD of the second back-to-back switch pair are turned on, thereby achieving a zero-voltage switching (soft switching) operation.

Incidentally, the operation details of the positive half cycle mentioned above can realize the soft switching operation of the first switches S1, S3 and the fifth switches SB, SD of the second back-to-back switch pair. As for the operation of the negative half cycle, since it is symmetrically related to the operation of the positive half cycle, the operation from time t10 to time t14 mentioned above can be similarly realized. As shown in FIG. 9B, the operation corresponding to time t20 to time t24 can also realize the soft switching operation of the second switches S2, S4 and the third switches SA, SC of the second back-to-back switch pair, which will not be repeated here.

For the soft switching scheme of the single-phase two-wire to single-phase three-wire AC-to-AC converter proposed in the present disclosure, as shown in FIG. 8, an unbalanced load simulation test is performed. The simulation conditions set the maximum output currents IA, IB to be 32 Arms (effective value), and the rated output voltages VAN, VBN to be 120 Vrms. The load load1 is set to 3.75 Ω, corresponding to full load output; the load load2 is set to 100 kΩ to simulate the situation close to no load. According to the simulation results, under extreme unbalanced load conditions, the output voltage has an offset of about 9%. Considering the output voltage tolerance range of ±10%, it is still feasible to adopt an open-loop control scheme.

In addition, a balanced load simulation is performed for the soft switching solution of the single-phase two-wire to single-phase three-wire AC-to-AC converter proposed in the present disclosure. The simulation conditions set the maximum output currents IA, IB to 32 Arms, and the rated output voltages VAN, VBN to 120 Vrms. The loads load1 and load2 are both set to 3.75 Ω to simulate full-load output conditions. According to the simulation results, under balanced load conditions, the output voltage offset is less than 1%, which is mainly affected by the on-resistance voltage drop of the switching components.

Please refer to FIG. 17, which shows a circuit diagram of a three-phase DC-to-AC converter according to the present disclosure. By using the bidirectional switch unit proposed in the present disclosure, a soft switching scheme of the three-phase DC-to-AC (DC/AC) converter is established, which can be applied to drive three-phase AC loads, and the switching loss is reduced by soft switching to achieve the purpose of increasing the switching frequency and increasing the system efficiency. As shown in FIG. 17, the three-phase DC-to-AC converter includes six bidirectional switch units, and each two bidirectional switch units are connected in series to form a set of switch bridge arms to form a structure in which three sets of switch bridge arms are connected in parallel. The three-phase DC-to-AC converter receives a DC power source VDC, and converts the DC power source VDC to output a three-phase AC power source, which can be applied to drive a three-phase AC load.

In summary, the present disclosure has the following features and advantages:
1. The overall system structure achieves a soft-switching effect through structural adjustments in the switch unit, and the output voltage is distributed through the alternating operation of the two switch units. By adding auxiliary switches, inductors and capacitors in the switch unit to provide an additional resonant circuit, the voltage at both terminals is zero before the switch is turned on, achieving a soft-switching effect. Compared with the traditional hard-switching solution, the switching loss during switching is reduced, thereby increasing system efficiency and heat dissipation conditions. In addition, compared with the center-tapped line-frequency transformer, the weight and volume can be improved to a certain extent.
2. Regardless of whether the load is balanced or unbalanced, each high-frequency switch can achieve the desired zero-voltage switching behavior by operating in the positive and negative half-cycles of the input power source.

## Claims

1. A bidirectional switch unit, **characterized in that** the bidirectional switch unit comprising:
an inductor (L1, L2, L2a, L2b, L2c, L3, L3a, L3b, L3c) having a first terminal and a second terminal,
a first switch (S1, S1a, S1b, S1c, S3, S3a, S3b, S3c) having a first terminal and a second terminal, the first terminal of the first switch (S1, S1a, S1b, S1c, S3, S3a, S3b, S3c) connected to the first terminal of the inductor (L1, L2, L2a, L2b, L2c, L3, L3a, L3b, L3c) to form a first common-connected node (P1),
a second switch (S2, S2a, S2b, S2c, S4, S4a, S4b, S4c) having a first terminal and a second terminal, the first terminal of the second switch (S2, S2a, S2b, S2c, S4, S4a, S4b, S4c) connected to the second terminal of the inductor (L1, L2, L2a, L2b, L2c, L3, L3a, L3b, L3c) to form a second common-connected node (P2),
a first back-to-back switch pair (SA, SA2) and a first capacitor (CA, CAa, CAb, CAc, CC, CCa, CCb, CCc), the first back-to-back switch pair (SA, SA2) connected to the first capacitor (CA, CAa, CAb, CAc, CC, CCa, CCb, CCc) in series to form a first switch branch, the first switch branch having a first terminal and a second terminal, the first terminal of the first switch branch connected to the second terminal of the first switch (S1, S1a, S1b, S1c, S3, S3a, S3b, S3c), and the second terminal of the first switch branch connected to the second common-connected node (P2), and
a second back-to-back switch pair (SB, SB2) and a second capacitor (CB, CBa, CBb, CBc, CD, CDa, CDb, CDc), the second back-to-back switch pair (SB, SB2) connected to the second capacitor (CB, CBa, CBb, CBc, CD, CDa, CDb, CDc) in series to form a second switch branch, the second switch branch having a first terminal and a second terminal, the first terminal of the second switch branch connected to the first common-connected node (P1), and the second terminal of the second switch branch connected to the second terminal of the second switch (S2, S2a, S2b, S2c, S4, S4a, S4b, S4c).

2. The bidirectional switch unit as claimed in claim 1, wherein the first back-to-back switch pair (SA, SA2) comprises a third switch (SA, SAa, SAb, SAc, SC, SCa, SCb, SCc) and a fourth switch (SA2, SA2a, SA2b, SA2c, SC2, SC2a, SC2b, SC2c), and the third switch (SA, SAa, SAb, SAc, SC, SCa, SCb, SCc) is connected back-to-back to the fourth switch (SA2, SA2a, SA2b, SA2c, SC2, SC2a, SC2b, SC2c); wherein the second back-to-back switch pair (SB, SB2) comprises a fifth switch (SB, SBa, SBb, SBc, SD, SDa, SDb, SDc) and a sixth switch (SB2, SB2a, SB2b, SB2c, SD2, SD2a, SD2b, SD2c), and the fifth switch (SB, SBa, SBb, SBc, SD, SDa, SDb, SDc) is connected back-to-back to the sixth switch (SB2, SB2a, SB2b, SB2c, SD2, SD2a, SD2b, SD2c).

3. The bidirectional switch unit as claimed in claim 2, wherein the third switch (SA, SAa, SAb, SAc, SC, SCa, SCb, SCc) and the fourth switch (SA2, SA2a, SA2b, SA2c, SC2, SC2a, SC2b, SC2c) are metal-oxide-semiconductor field-effect transistors, and the third switch (SA, SAa, SAb, SAc, SC, SCa, SCb, SCc) and the fourth switch (SA2, SA2a, SA2b, SA2c, SC2, SC2a, SC2b, SC2c) are connected to each other in a common-drain manner; wherein the fifth switch (SB, SBa, SBb, SBc, SD, SDa, SDb, SDc) and the sixth switch (SB2, SB2a, SB2b, SB2c, SD2, SD2a, SD2b, SD2c) are metal-oxide-semiconductor field-effect transistors, and the fifth switch (SB, SBa, SBb, SBc, SD, SDa, SDb, SDc) and the sixth switch (SB2, SB2a, SB2b, SB2c, SD2, SD2a, SD2b, SD2c) are connected to each other in a common-drain manner.

4. The bidirectional switch unit as claimed in claim 2, wherein the third switch (SA, SAa, SAb, SAc, SC, SCa, SCb, SCc) and the fourth switch (SA2, SA2a, SA2b, SA2c, SC2, SC2a, SC2b, SC2c) are metal-oxide-semiconductor field-effect transistors, and the third switch (SA, SAa, SAb, SAc, SC, SCa, SCb, SCc) and the fourth switch (SA2, SA2a, SA2b, SA2c, SC2, SC2a, SC2b, SC2c) are connected to each other in a common-source manner; wherein the fifth switch (SB, SBa, SBb, SBc, SD, SDa, SDb, SDc) and the sixth switch (SB2, SB2a, SB2b, SB2c, SD2, SD2a, SD2b, SD2c) are metal-oxide-semiconductor field-effect transistors, and the fifth switch (SB, SBa, SBb, SBc, SD, SDa, SDb, SDc) and the sixth switch (SB2, SB2a, SB2b, SB2c, SD2, SD2a, SD2b, SD2c) are connected to each other in a common-source manner.

5. The bidirectional switch unit as claimed in claim 2, wherein the bidirectional switch unit receives an input power source (Vin); when the input power source (Vin) is a positive voltage, the second switch (S2, S2a, S2b, S2c, S4, S4a, S4b, S4c) and the sixth switch (SB2, SB2a, SB2b, SB2c, SD2, SD2a, SD2b, SD2c) are always turned on, and the third switch (SA, SAa, SAb, SAc, SC, SCa, SCb, SCc) and the fourth switch (SA2, SA2a, SA2b, SA2c, SC2, SC2a, SC2b, SC2c) are always turned off; when the input power source (Vin) is a negative voltage, the first switch (S1, S1a, S1b, S1c, S3, S3a, S3b, S3c) and the fourth switch (SA2, SA2a, SA2b, SA2c, SC2, SC2a, SC2b, SC2c) are always turned on, and the fifth switch (SB, SBa, SBb, SBc, SD, SDa, SDb, SDc) and the sixth switch (SB2, SB2a, SB2b, SB2c, SD2, SD2a, SD2b, SD2c) are always turned off.

6. The bidirectional switch unit as claimed in claim 5, wherein when the input power source (Vin) is the positive voltage, the first switch (S1, S1a, S1b, S1c, S3, S3a, S3b, S3c) and the fifth switch (SB, SBa, SBb, SBc, SD, SDa, SDb, SDc) are controlled to be switched, and when voltages across the first switch (S1, S1a, S1b, S1c, S3, S3a, S3b, S3c) and the fifth switch (SB, SBa, SBb, SBc, SD, SDa, SDb, SDc) are zero during switching, the first switch (S1, S1a, S1b, S1c, S3, S3a, S3b, S3c) and the fifth switch (SB, SBa, SBb, SBc, SD, SDa, SDb, SDc) are controlled to be turned on; when the input power source (Vin) is the negative voltage, the second switch (S2, S2a, S2b, S2c, S4, S4a, S4b, S4c) and the third switch (SA, SAa, SAb, SAc, SC, SCa, SCb, SCc) are controlled to be switched, and when voltages across the second switch (S2, S2a, S2b, S2c, S4, S4a, S4b, S4c) and the third switch (SA, SAa, SAb, SAc, SC, SCa, SCb, SCc) are zero during switching, the second switch (S2, S2a, S2b, S2c, S4, S4a, S4b, S4c) and the third switch (SA, SAa, SAb, SAc, SC, SCa, SCb, SCc) are controlled to be turned on.

7. A power converter, **characterized in that** the power converter comprising:
at least one switch bridge arm, comprising a plurality of bidirectional switch units, each bidirectional switch unit comprising:
an inductor (L1, L2, L2a, L2b, L2c, L3, L3a, L3b, L3c) having a first terminal and a second terminal,
a first switch (S1, S1a, S1b, S1c, S3, S3a, S3b, S3c) having a first terminal and a second terminal, the first terminal of the first switch (S1, S1a, S1b, S1c, S3, S3a, S3b, S3c) connected to the first terminal of the inductor (L1, L2, L2a, L2b, L2c, L3, L3a, L3b, L3c) to form a first common-connected node (P1),
a second switch (S2, S2a, S2b, S2c, S4, S4a, S4b, S4c) having a first terminal and a second terminal, the first terminal of the second switch (S2, S2a, S2b, S2c, S4, S4a, S4b, S4c) connected to the second terminal of the inductor (L1, L2, L2a, L2b, L2c, L3, L3a, L3b, L3c) to form a second common-connected node (P2),
a first back-to-back switch pair (SA, SA2) and a first capacitor (CA, CAa, CAb, CAc, CC, CCa, CCb, CCc), the first back-to-back switch pair (SA, SA2) connected to the first capacitor (CA, CAa, CAb, CAc, CC, CCa, CCb, CCc) in series to form a first switch branch, the first switch branch having a first terminal and a second terminal, the first terminal of the first switch branch connected to the second terminal of the first switch (S1, S1a, S1b, S1c, S3, S3a, S3b, S3c), and the second terminal of the first switch branch connected to the second common-connected node (P2), and
a second back-to-back switch pair (SB, SB2) and a second capacitor (CB, CBa, CBb, CBc, CD, CDa, CDb, CDc), the second back-to-back switch pair (SB, SB2) connected to the second capacitor (CB, CBa, CBb, CBc, CD, CDa, CDb, CDc) in series to form a second switch branch, the second switch branch having a first terminal and a second terminal, the first terminal of the second switch branch connected to the first common-connected node (P1), and the second terminal of the second switch branch connected to the second terminal of the second switch (S2, S2a, S2b, S2c, S4, S4a, S4b, S4c),
wherein the at least one switch bridge arm receives an input power source (Vin), and converts the input power source (Vin) into an output power source through the bidirectional switch units so as to provide a plurality of outputs.

8. The power converter as claimed in claim 7, wherein the first back-to-back switch pair (SA, SA2) comprises a third switch (SA, SAa, SAb, SAc, SC, SCa, SCb, SCc) and a fourth switch (SA2, SA2a, SA2b, SA2c, SC2, SC2a, SC2b, SC2c), and the third switch (SA, SAa, SAb, SAc, SC, SCa, SCb, SCc) is connected back-to-back to the fourth switch (SA2, SA2a, SA2b, SA2c, SC2, SC2a, SC2b, SC2c); wherein the second back-to-back switch pair (SB, SB2) comprises a fifth switch (SB, SBa, SBb, SBc, SD, SDa, SDb, SDc) and a sixth switch (SB2, SB2a, SB2b, SB2c, SD2, SD2a, SD2b, SD2c), and the fifth switch (SB, SBa, SBb, SBc, SD, SDa, SDb, SDc) is connected back-to-back to the sixth switch (SB2, SB2a, SB2b, SB2c, SD2, SD2a, SD2b, SD2c).

9. The power converter as claimed in claim 8, wherein the bidirectional switch unit receives an input power source (Vin); when the input power source (Vin) is a positive voltage, the second switch (S2, S2a, S2b, S2c, S4, S4a, S4b, S4c) and the sixth switch (SB2, SB2a, SB2b, SB2c, SD2, SD2a, SD2b, SD2c) are always turned on, and the third switch (SA, SAa, SAb, SAc, SC, SCa, SCb, SCc) and the fourth switch (SA2, SA2a, SA2b, SA2c, SC2, SC2a, SC2b, SC2c) are always turned off; when the input power source (Vin) is a negative voltage, the first switch (S1, S1a, S1b, S1c, S3, S3a, S3b, S3c) and the fourth switch (SA2, SA2a, SA2b, SA2c, SC2, SC2a, SC2b, SC2c) are always turned on, and the fifth switch (SB, SBa, SBb, SBc, SD, SDa, SDb, SDc) and the sixth switch (SB2, SB2a, SB2b, SB2c, SD2, SD2a, SD2b, SD2c) are always turned off.

10. The power converter as claimed in claim 9, wherein when the input power source (Vin) is the positive voltage, the first switch (S1, S1a, S1b, S1c, S3, S3a, S3b, S3c) and the fifth switch (SB, SBa, SBb, SBc, SD, SDa, SDb, SDc) are controlled to be switched at high frequency, and when voltages across the first switch (S1, S1a, S1b, S1c, S3, S3a, S3b, S3c) and the fifth switch (SB, SBa, SBb, SBc, SD, SDa, SDb, SDc) are zero during switching, the first switch (S1, S1a, S1b, S1c, S3, S3a, S3b, S3c) and the fifth switch (SB, SBa, SBb, SBc, SD, SDa, SDb, SDc) are controlled to be turned on; when the input power source (Vin) is the negative voltage, the second switch (S2, S2a, S2b, S2c, S4, S4a, S4b, S4c) and the third switch (SA, SAa, SAb, SAc, SC, SCa, SCb, SCc) are controlled to be switched at high frequency, and when voltages across the second switch (S2, S2a, S2b, S2c, S4, S4a, S4b, S4c) and the third switch (SA, SAa, SAb, SAc, SC, SCa, SCb, SCc) are zero during switching, the second switch (S2, S2a, S2b, S2c, S4, S4a, S4b, S4c) and the third switch (SA, SAa, SAb, SAc, SC, SCa, SCb, SCc) are controlled to be turned on.

11. The power converter as claimed in claim 7, further comprising:
at least one output filter, comprising a filtering inductor (L, La, Lb, Lc), a first filtering capacitor (C1), and a second filtering capacitor (C2),
wherein each of the at least one output filter is coupled between two bidirectional switch units.

12. The power converter as claimed in claim 7, wherein the number of the bidirectional switch units is two, and the two bidirectional switch units are connected in series to form a switch bridge arm so that the power converter forms a single-phase two-wire to single-phase three-wire AC-to-AC converter structure.

13. The power converter as claimed in claim 7, wherein the number of the bidirectional switch units is six, and each two bidirectional switch units are connected in series to form a set of switch bridge arms so as to form a structure in which three sets of switch bridge arms are connected in parallel.

14. The power converter as claimed in claim 13, wherein the power converter receives a DC power source, and the three sets of switch bridge arms convert the DC power source to output a three-phase AC power source.
